# EUROPÄISCHE PATENTSCHRIFT

(11) **EP 0 685 309 B1**
(45) Veröffentlichungstag und Bekanntmachung des Hinweises auf die Patenterteilung: **18.08.1999**
(21) Anmeldenummer: 95107897.1
(22) Anmeldetag: 24.05.1995
(51) Int. Cl.: B29B 7/00

(54) **Verfahren zur Herstellung von plattenförmigen Dichtungswerkstoffen**
Method for making water-tight material in plateform
Procédé de fabrication de matériaux d'étanchéité à forme de plaque

(30) Priorität: 01.06.1994 DE 4419087
(43) Veröffentlichungstag der Anmeldung: 06.12.1995
(73) Patentinhaber: Hecker Werke GmbH & Co. KG, Spezialfabriken für Dicht- und Reibelemente, 71093 Weil im Schönbuch (DE)
(72) Erfinder: Liedtke, Ulrich, Dr., D-72135 Dettenhausen (DE); Moser, Werner, Dipl.-Ing., D-72622 Nürtingen (DE); Barna, Alexander, D-71093 Weil im Schönbuch (DE); Schmid, Willi, D-72135 Dettenhausen (DE)
(74) Vertreter: Riedel, Peter, Dipl.-Ing.

(56) Entgegenhaltungen:
- EP-A- 0 299 293
- FR-A- 2 304 638
- GB-A- 943 119
- US-A- 3 214 404

## Beschreibung

Die Erfindung bezieht sich auf ein Verfahren zur Herstellung plattenförmigen Dichtungswerkstoffen der im Oberbegriff des Anspruchs 1 angegeben Gattung.

Bei der Herstellung von plattenförmigen Dichtungswerkstoffen wurde insbesondere aus Gründen der Wasserdampffestigkeit und Temperaturbeständigkeit häufig Asbest eingesetzt. Durch das Verbot von Asbest mußte auf andere Faserwerkstoffe übergegangen werden, was zu einer Änderung der Dichtungseigenschaften führte. Dabei spielten Kunststoffasern eine wesentliche Rolle, wobei allerdings die Beständigkeit gegen Wasserdampf und Temperaturen, die 200° übersteigen, nicht gegeben ist. Insbesondere bei Einwirkung von Wasser oder Dampf erfolgt eine chemische Zerstörung der Kunststoffaser und somit auch eine Zerstörung der Dichtung. Auch im Hinblick auf das Warmsetzverhalten und die Versprödung des Dichtungsmaterials sind die auf Kunststoffaserbasis hergestellten Dichtungen teilweise unbefriedigend.

Der vorliegenden Erfindung liegt daher die Aufgabe zugrunde, ein Verfahren zur Herstellung von plattenförmigen Dichtungswerkstoffen der im Oberbegriff des Anspruchs 1 genannten Gattung zu schaffen, durch das Dichtungswerkstoffe mit einer höheren Temperaturfestigkeit und besserer Medienbeständigkeit erreicht werden.

Diese Aufgabe wird bei einem Verfahren der gattungsgemäßen Art durch die im Anspruch 1 angegebenen kennzeichnenden Verfahrensschritte gelöst.

Durch den Einsatz von Mineralfasern wird sowohl die Temperatur- als auch die Medienbeständigkeit des Dichtungswerkstoffes wesentlich verbessert. Die Verwendung von Mineralfasern wurde zur Herstellung von plattenförmigen Dichtungswerkstoffen bisher nicht in Betracht gezogen, da aufgrund der glatten Oberfläche der Mineralfasern keine ausreichende Verbindung mit der Gummilösung erreicht wurde. Außerdem wurden Mineralfasern als ungeeignet angesehen, weil beim Verarbeiten am Kalander eine Entmischung stattfindet, wodurch die Homogenität verloren geht. Diese Vorurteile gegen die Verwendung von Mineralfasern sind durch die vorliegende Erfindung überwunden, da durch die vorgeschlagenen Verfahrensschritte eine besonders geeignete Mischung und die Aufrechterhaltung einer gleichmäßigen Verteilung der Bestandteile gegeben ist. Durch den Entzug des Lösungsmittels unter Einwirkung von Vakuum zerfällt die spezielle Mischung in Bröckchen oder Krümel von gleicher Konsistenz. Die Reifezeit und das spätere Befeuchten der als Krümel oder Bröckchen vorliegenden Mischung ermöglichen die geeignete Verarbeitung am Kalander, ohne daß eine Entmischung auftritt.

Eine bevorzugte Weiterbildung des erfindungsgemäßen Verfahrens besteht darin, daß das Mischen der Komponenten vor der Erzeugung des Vakuums mit geringer Drehzahl und im Vakuum mit erhöhter Drehzahl erfolgt. Die Zeitspanne zum Lagern der Mischung sollte zumindest 6 Stunden, vorzugsweise jedoch mehr als 12 Stunden, betragen. Dabei erfolgt die Lagerung zweckmäßigerweise in einem geschlossenen Behälter, in den die Krümel bzw. Bröckchen aus dem Mischer abgefüllt werden. Damit die Verarbeitung der als Krümel vorliegenden Mischung am Kalander einen möglichst gleichmäßigen Prozeß gewährleistet, ist es zweckmäßig, die Mischung nach dem Befeuchten mit Lösungsmittel mindestens zwei Stunden zu lagern, damit sich ein einheitlicher Feuchtigkeitsgehalt der gesamten Ware einstellt.

Die Drehzahl des Mischers kann in Abhängigkeit des jeweiligen Verfahrensschrittes variiert werden, wobei es zweckmäßig ist, lediglich nach der Eingabe des Mineralfaseranteils mit einer deutlich niedrigeren Drehzahl zu fahren. Insbesondere während des Entzugs des Lösungsmittels im Vakuum sollte eine hohe Mischerdrehzahl eingestellt sein. Auf diese Weise wird ein guter Durchmischungsgrad während der Verfestigung der Masse aufrechterhalten. Der Mischvorgang der Kunststoffasern und Füllstoffe im trockenen Zustand erfolgt vorzugsweise etwa 2 Minuten lang. Aufgrund der erheblichen Menge von Gummilösung, die in den Mischbehälter zugepumpt wird, und der gleichmäßigen Verteilung über die in dem Mischbehälter befindliche Masse ist für diesen Verfahrensschritt eine Zeit von ca. 3 Minuten vorgesehen. Die gleiche Zeitspanne wird für das darauf folgende Einmischen des Mineralfaseranteils benötigt.

Durch das Mischen im Vakuum wird dem Mischgut eine bestimmte Menge des in der Gummilösung enthaltenen Lösungsmittels entzogen, wobei als Kriterium für diesen Verfahrensschritt die tatsächlich entzogene Lösungsmittelmenge dienen soll. Da Variationen in der Rezeptur und somit auch in der Lösungsmittelmenge möglich sind und auch beim Evakuieren Schwankungen beim Erzeugen des Unterdrucks auftreten können, kann die Zeitspanne für den Lösungsmittelentzug unterschiedlich sein. Sie wird jedoch in aller Regel zwischen 8 und 15 Minuten, vorzugsweise 10 Minuten, betragen. Dabei sollte im evakuierten Raum ein Druck von etwa 50 mbar bis 120 mbar herrschen. Das Kalanderverfahren erfolgt nach Maßgabe eines eingegebenen Programms. In dem jeweiligen Programm sind die Parameter der einzelnen Schritte des Ablaufs enthalten, wobei die Steuerung des Druckes und/oder der Friktion der Kalanderwalze in Abhängigkeit der zunehmenden Dicke des Materials erfolgt. Dabei ist es vorteilhaft, daß bis zu einer Dicke von ca. 0,25 mm bis 0,4 mm der Druck konstant ist und/oder die Friktion 0 % beträgt. Nach dem Verfahrensabschnitt mit konstantem Druck erfolgt ein allmählicher Druckanstieg bei gleichzeitiger Verringerung der Umfangsgeschwindigkeit der Kalanderwalzen, wobei die Friktion auf -3,0 %, vorzugsweise -5,0 % eingestellt wird. Der konstante Druck zu Beginn des Kalandrierens beträgt ca. 14 t (1 t entspricht dabei etwa 9,8 kN) und der maximale Druck liegt für Platten mit geringen Enddicken bei etwa 15 t, für Platten mit Enddicken von mehr als 1,5 mm bei etwa 16,2 t.

Die spezifischen Eigenschaften des Dichtungswerkstoffes werden nicht alleine durch das Kalandrieren bestimmt, sondern auch durch die Rezeptur der Rohstoffe. Bezogen auf das Trockengewicht der Mischung soll der Anteil der Fasern zwischen 20 % und 50 % liegen. Als besonders geeignet wird angesehen, daß der Mineralfaseranteil 30 % und der Anteil der Kunststoffasern 3,0 % beträgt. Die Mineralfasern bestehen vorzugsweise aus einem amorphen Kalzium-Magnesium-Aluminium-Silikat. Die verschiedenen Füllstoffe, die der Mischung zugegeben werden, sollen bezogen auf das Trockengewicht der Mischung insgesamt einen Anteil von etwa 53 % umfassen. Auch bei der Auswahl dieser Füllstoffe sollte den an den Dichtungswerkstoff gestellten Anforderungen Rechnung getragen werden. Daher wird vorgeschlagen, daß als Füllstoffe kalziniertes Aluminiumsilikat und Siliziumdioxid, deren Oberfläche mit Aminosilan versehen ist, sowie amorphes Siliziumdioxid vorgesehen sind. Der Anteil der Zusatzstoffe ist insgesamt sehr gering und beträgt lediglich ca. 2,46 % der gesamten Mischung. Bezogen auf das Trockengewicht der Mischung beträgt der Anteil des Gummis etwa 44 % beträgt. Diese Gummilösung besteht aus ca. 5/6 Methylbenzol und 1/6 Ethylenpropylenterpolymer.

Selbstverständlich können die Anteile der Fasern, Gummilösung, Füll- und Zusatzstoffe auch auf das Naßgewicht bezogen sein, wobei sich die prozentualen Anteile der einzelnen Komponenten aufgrund der erheblichen Lösungsmittelmenge verändern.

Eine bevorzugte Ausführung besteht darin, daß die Zusatzstoffe auch einen Anteil von Farbruß umfassen. Durch den Farbruß wird erreicht, daß der Dichtungswerkstoff eine verbesserte Gasdichtheit aufweist.

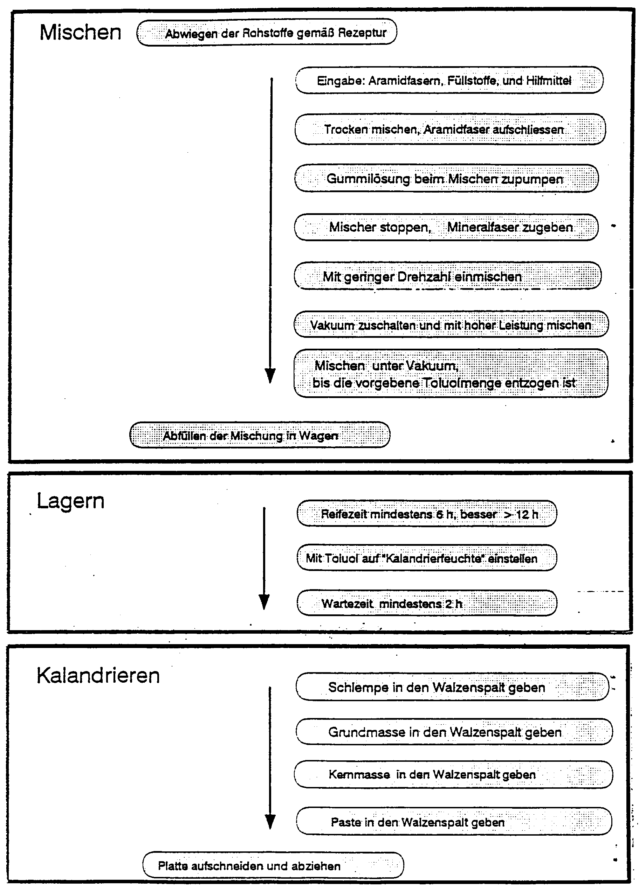

Das Verfahren zur Herstellung von plattenförmigen Dichtungswerkstoffen wird nachstehend anhand des in der Zeichnung dargestellten Ablaufplans mit einer bevorzugten Rezeptur beschrieben. Zunächst werden die Komponenten nach der Rezeptur bemessen, und zwar in Prozent des Trockengewichts der gewünschten Mischung:

| Rohstoff | Anteil |
|---|---|
| Gummi (ohne Lösungsmittel) | 11,72 % |

| Fasern | |
|---|---|
| Polyperaphenylenterephtalamid (Aramid) | 3,0 % |
| amorphe Ca-Mg-Al-Silikat-Fasern | 30,0 % |

| Füllstoffe | |
|---|---|
| kalziniertes Aluminiumsilikat | 13,82 % |
| Siliziumdioxid | 24,0 % |
| amorphes Siliziumdioxid | 15,0 % |

| Zusatzstoffe | |
|---|---|
| N-Isopropyl-N'phenyl--p-phenylendiamin | 0,234 % |
| 1,4-Benzochinon-dioxin 65%ig in Mineralöl | 0,234 % |
| Dipentamethylenthiuramtetrasulfid | 1,172 % |
| Zinkoxid | 0,820 % |
| Trockengewicht | 100,000 % |

Die Gummilösung besteht zu 83,21 % aus Methylbenzol und 16,79 % aus Ethylen-Propylen-Terpolymer.

| Rohstoff | Anteil |
|---|---|
| Gummilösung | 42,47 % |

| Fasern | |
|---|---|
| Polyperaphenylenterephtalamid (Aramid) | 1,946 % |
| amorphe Ca-Mg-Al-Silikat-Fasern | 19,464 % |

| Füllstoffe | |
|---|---|
| kalziniertes Aluminiumsilikat, Oberfläche mit Aminosilan | 9,732 % |
| Siliziumdioxid, Oberfläche mit Aminosilan | 13,625 % |
| amorphes Siliziumdioxid | 9,732 % |

| Zusatzstoffe | |
|---|---|
| N-Phenylbenzolamin, Rk.prod. 2,3,3-Trimethylpenten | 0,214 % |
| N-(Cyclohxylthio)-phthalimide | 0,093 % |
| Dipentamethylenthiuramtetrasulfid | 0,833 % |
| Dibenzothiazyldisulfid | 0,343 % |
| Zinkoxid | 1,160 % |
| Farbruß | 0,389 % |
| Naßgewicht | 100,000 % |

Hierbei besteht die Gummilösung zu 82,140 % aus Methylbezol, 9,356 % aus Butadien-Acrylnitril-Kautschuk und 8,504 % aus hydr. Butadien-Acrylnitril-Kautschuk.

In die Mischtrommel werden nun die Aramidfaser, alle Füllstoffe und alle Zusatzstoffe beispielsweise von Hand eingegeben, danach wird der Mischer mit einer Drehzahl von 110 n/min betrieben. Die Eingabe der genannten Komponenten ist nach ca. 40 Sekunden beendet. Bereits während der Eingabe wird die Mischtrommel beheizt, damit die für den Prozeß geeignete Temperatur von ca. 40° C erreicht wird. Diese Temperatur stellt sich nach Zugabe der Gummilösung durch Zufuhr ausreichender Wärmeenergie und verdampfungsbedingte Kühlung ein. Es folgt nun das trockene Mischen über ca. 80 Sekunden mit gleicher Drehzahl, wodurch die Aramidfaser aufgeschlossen wird. Aus einem Behälter wird die Gummilösung zugepumpt bei unveränderter Drehzahl des Mischers. Dieser Verfahrensschritt benötigt etwa 3 Minuten. Es folgt nun (beispielsweise wieder von Hand bei stehendem Mischer) die Zugabe der Mineralfasern, danach wird die Drehzahl des Mischers auf 55 n/min eingestellt. Für diesen Verfahrensschritt sind weitere 3 Minuten vorgesehen.

Die Mischvorrichtung ist mit einer Vakuumanlage versehen, durch die nun ein Vakuum von 50 mbar bis 120 mbar erzeugt wird. Für den Aufbau des Vakuums werden etwa 2 Minuten benötigt. Dann wird das Vakuum noch etwa 10 bis 15 Minuten aufrechterhalten. Während des gesamten Vakuumbetriebs beträgt die Drehzahl des Mischers 110 n/min. Infolge des Vakuums wird der Mischung eine erhebliche Menge des in der Gummilösung enthaltenen Lösungsmittels entzogen, wobei als Kriterium für die Beendigung des Vakuumbetriebs die Menge des entzogenen Lösungsmittels dient. Auf diese Weise erfolgt eine Trocknung und Stabilisierung der Homogenität der Mischung. Durch den Entzug des Lösungsmittels zerfällt die Mischung in kleinere Bröckchen bzw. Krümel; die Mischung wird in einen geeigneten verschließbaren Behälter, vorzugsweise einen Wagen, abgefüllt.

In dem geschlossenen Behälter wird die als Krümel vorliegende Mischung mindestens 6 Stunden, vorzugsweise jedoch mehr als 12 Stunden, ruhen gelassen. Diesen Verfahrensschritt bezeichnet man als Reifezeit. Für die weitere Verarbeitung der Mischung muß diese auf eine bestimmte Feuchte eingestellt werden, wofür das gleiche Lösungsmittel, das auch in der Gummilösung enthalten ist, benutzt wird. Die Menge des Lösungsmittels ist so bemessen, daß die Krümel lediglich angefeuchtet werden. So besteht keine Gefahr des Verklumpens und die Mischungskrümel bleiben schaufelbar, was für die spätere Beschickung des Kalanders wichtig ist. Nach dem Befeuchten der Krümel mit Lösungsmittel ist eine Wartezeit von mindestens 2 Stunden in dem geschlossenen Behälter vorgesehen, damit sich eine gleichmäßige Feuchte des gesamten Behälterinhalts einstellt.

Die Mischung kommt nun an den Kalander. Das Kalanderverfahren läuft automatisch nach den unten aufgelisteten Schritten ab, wobei eine ständige Erfassung der Dicke erfolgt und der jeweils nächste Schritt bei Erreichen einer vorgegebenen Dicke beginnt. Durch das eingegebene Programm werden der Druck, die Geschwindigkeiten der Walzen und die Friktion geregelt. In den Walzenspalt wird zunächst eine Schlempe gegeben, welche eine Antihaftbeschichtung ist, die bei allen Plattenwerkstoffen - auchbei herkömmlichen - direkt im Kalanderprozeß eingebracht wird, jedoch während des Beginns des Kalanderprozesses als Haftmittel dient und bis zu einer Dicke von 0,01 mm aufgetragen wird. Darauf folgt der Auftrag einer ebenfalls gebräuchlichen Grundmasse, die stark faserhaltig ist. Diese Grundmasse wird bis zu einer Dicke von 0,02 mm einschließlich der Schlempe aufgetragen. Die Walzengeschwindigkeit wird nun von 60 m/min auf 45 m/min reduziert. Der Druck bleibt jedoch unverändert bei 14 t während schaufelweise die Mischung in den Kalanderspalt gegeben wird. Die Krümel werden durch den Mischprozeß und die Feuchteeinstellung in ihrer Viskosität so konditioniert, daß auch unter der Druck- und Scherwirkung keine Neigung zur Entmischung der Komponenten, insbesondere der Fasern besteht. Bei in mehreren Schritten abnehmender Walzengeschwindigkeit bis zu 20 m/min, aber konstantem Druck wird eine Dicke von 0,3 mm erreicht, danach steigt der Druck allmählich an.

Während bis zum Erreichen einer Dicke von 0,4 mm die Friktion der Walzen 0,0 % beträgt, wird nun mit einer Friktion von -5,0 % gefahren, das heißt die Heizwalze dreht sich schneller als die Kaltwalze. Unter weiterem schrittweisen Druckanstieg bis auf 16,2 t und Walzengeschwindigkeiten von zunächst 18 m/min, später 16 m/min und schließlich 14 m/min wird eine Dicke von 1,82 mm erzeugt. Bei geringfügiger Druckreduzierung auf 16 t und einer Geschwindigkeit von 13 m/min wird bei einer Friktion von -2,0 % die Dicke auf 1,83 mm gebracht. Abschließend wird bei auf 10 t reduziertem Druck und auf 30 m/min gesteigerter Walzengeschwindigkeit eine Paste zur Abdeckung der Platte aufgetragen, wodurch insgesamt eine Plattendicke von 1,85 mm erzeugt ist.

Der vorstehend beschriebene Ablauf am Kalander ist in einzelnen Schritten nachfolgend aufgelistet. Dabei bedeuten in der Materialangabe:
- 1: = Schlempe
- 2: = Grundmasse
- 3: = Mischung
- 4: = Paste.

| Schritt | Dicke (mm) | Druck (to) | Geschw. (m/min) | Friktion (%) | Material |
|---|---|---|---|---|---|
| 1 | 0,01 | 14,0 | 60,0 | 0,0 | 1 |
| 2 | 0,02 | 14,0 | 60,0 | 0,0 | 2 |
| 3 | 0,03 | 14,0 | 45,0 | 0,0 | 3 |
| 4 | 0,05 | 14,0 | 40,0 | 0,0 | 3 |
| 5 | 0,10 | 14,0 | 35,0 | 0,0 | 3 |
| 6 | 0,15 | 14,0 | 30,0 | 0,0 | 3 |
| 7 | 0,20 | 14,0 | 25,0 | 0,0 | 3 |
| 8 | 0,25 | 14,0 | 20,0 | 0,0 | 3 |
| 9 | 0,30 | 14,0 | 20,0 | 0,0 | 3 |
| 10 | 0,40 | 14,4 | 20,0 | 0,0 | 3 |
| 11 | 0,50 | 14,6 | 18,0 | -5,0 | 3 |
| 12 | 0,70 | 14,7 | 18,0 | -5,0 | 3 |
| 13 | 0,90 | 14,8 | 18,0 | -5,0 | 3 |
| 14 | 1,10 | 15,0 | 18,0 | -5,0 | 3 |
| 15 | 1,30 | 15,4 | 16,0 | -5,0 | 3 |
| 16 | 1,50 | 15,6 | 16,0 | -5,0 | 3 |
| 17 | 1,70 | 15,8 | 16,0 | -5,0 | 3 |
| 18 | 1,82 | 16,2 | 14,0 | -5,0 | 3 |
| 19 | 1,83 | 16,0 | 13,0 | -2,0 | 3 |
| 20 | 1,85 | 10,0 | 30,0 | 0,0 | 4 |

Die Solltemperatur der Heizwalze des Kalanders liegt bei 140°C, ein Toleranzbereich von 125°C bis 150°C ist jedoch zulässig. Schließlich werden die Kalanderwalzen gestoppt, die Platte aufgeschnitten und abgezogen.

Durch das vorstehend beschriebene Verfahren sind plattenförmige Dichtungen mit besserer Druck-, Temperatur- und Medienbeständigkeit herstellbar als dies mit den bekannten Verfahren möglich war. So liegt die Druckbelastbarkeit bei etwa 150 bar, die Temperaturbeständigkeit bei über 300°C und auch gegen die Einwirkung von Säuren und Dampf ist das Material resistent. Durch Variation des Druckes während des Kalandrierens und/oder durch Variation der Komponenten für die Mischung können Dichtungswerkstoffe mit unterschiedlichen spezifischen Eigenschaften hergestellt werden, beispielsweise mit besonderer Säure- und Dampfstabilität oder extremer Druckstandfestigkeit. Es können darüberhinaus Platten unterschiedlicher Dicken im Bereich zwischen 0,3 mm und 6 mm hergestellt werden, wobei lediglich bezogen auf die Enddicke der Platte die Schaltdicke der Schritte angepaßt wird.

Der Ablauf am Kalander würde für eine Platte mit Enddicke 0,8 mm wie folgt sein:

| Schritt | Dicke (mm) | Druck (to) | Geschw. (m/min) | Friktion (%) | Material |
|---|---|---|---|---|---|
| 1 bis 12 wie im ersten Beispiel | | | | | |
| 13 | 0,74 | 14,7 | 18,0 | -2,0 | 3 |
| 14 | 0,78 | 14,7 | 18,0 | 0,0 | 3 |
| 15 | 0,80 | 8,0 | 20 | 0,0 | 4 |

Das Beispiel für eine Platte mit Enddicke 5 mm lautet:

| Schritt | Dicke (mm) | Druck (to) | Geschw. (m/min) | Friktion (%) | Material |
|---|---|---|---|---|---|
| 1 bis 14 wie im ersten Beispiel | | | | | |
| 15 | 2,00 | 15,4 | 16,0 | -5,0 | 3 |
| 16 | 3,50 | 15,6 | 16,0 | -5,0 | 3 |
| 17 | 4,20 | 15,8 | 16,0 | -5,0 | 3 |
| 18 | 4,82 | 16,2 | 14,0 | -5,0 | 3 |
| 19 | 4,98 | 16,0 | 13,0 | -2,0 | 3 |
| 20 | 5,00 | 10,0 | 30,0 | 0,0 | 4 |

## Patentansprüche

1. Verfahren zur Herstellung von plattenförmigen Dichtungswerkstoffen, wobei Fasern mit Füllstoffen unter Zugabe von Kautschuk gemischt werden und diese Mischung in einem Kalander unter Einwirkung von Temperatur und Druck zu Platten verarbeitet wird, gekennzeichnet durch folgende Verfahrensschritte:
- Bemessung der Rohstoffanteile,
- Eingabe von Kunststoffasern, Füllstoffen und Zusatzstoffen in einen Mischbehälter und Mischen in trockenem Zustand,
- Zugabe einer Gummilösung unter Fortsetzung des Mischens,
- Eingabe eines Mineralfaseranteils,
- Fortsetzen des Mischvorganges unter Erzeugung eines Vakuums,
- Entzug einer bestimmten Menge des in der Gummilösung enthaltenen Lösungsmittels unter Vakuum,
- Lagern der Mischung während einer vorgegebenen Zeitspanne (Reifezeit),
- Befeuchten der Mischung mit Lösungsmittel,
- Zuführen einer Grundmasse in den Walzenspalt des Kalanders,
- Zuführen der Mischung in den Walzenspalt des Kalanders und Erzeugen einer bestimmten Plattendicke bei zunächst konstantem, später ansteigendem Druck des Kalanders,
- Aufschneiden und Abziehen der Platte.

2. Verfahren nach Anspruch 1,
dadurch gekennzeichnet, daß das Mischen der Komponenten vor der Erzeugung des Vakuums mit geringer Drehzahl und im Vakuum mit erhöhter Drehzahl erfolgt.

3. Verfahren nach einem der vorhergehenden Ansprüche,
dadurch gekennzeichnet, daß die Zeitspanne zum Lagern der Mischung mindestens sechs Stunden, vorzugsweise mehr als zwölf Stunden, beträgt.

4. Verfahren nach einem der vorhergehenden Ansprüche,
dadurch gekennzeichnet, daß die Mischung nach dem Befeuchten mit Lösungsmittel mindestens zwei Stunden gelagert wird.

5. Verfahren nach Anspruch 2,
dadurch gekennzeichnet, daß die Drehzahl des Mischers nach der Eingabe des Mineralfaseranteils etwa 40 n/min bis 70 n/min, vorzugsweise 55 n/min, und unter Einwirkung des Vakuums etwa 80 n/min bis 140 n/min, vorzugsweise 110 n/min, beträgt, wobei insbesondere die Drehzahl des Mischers vor dem Einmischen des Mineralfaseranteils wesentlich höher ist als beim Einmischen des Mineralfaseranteils.

6. Verfahren nach einem der vorhergehenden Ansprüche,
dadurch gekennzeichnet, daß der Mischvorgang von Kunststoffasern und Füllstoffen im trockenen Zustand etwa zwei Minuten lang erfolgt.

7. Verfahren nach einem der vorhergehenden Ansprüche,
dadurch gekennzeichnet, daß die Zugabe der Gummilösung und das Einmischen des Mineralfaseranteils jeweils über einen Zeitraum von etwa drei Minuten erfolgt.

8. Verfahren nach einem der vorhergehenden Ansprüche,
dadurch gekennzeichnet, daß der Lösungsmittelentzug etwa acht bis fünfzehn Minuten lang, vorzugsweise zehn Minuten lang, erfolgt, wobei der Druck im evakuierten Raum vorzugsweise etwa 50 mbar bis 120 mbar beträgt.

9. Verfahren nach einem der vorhergehenden Ansprüche,
dadurch gekennzeichnet, daß zu Beginn des Kalandrierens auf die Kalanderwalze eine Schlempe aufgebracht wird.

10. Verfahren nach einem der vorhergehenden Ansprüche,
dadurch gekennzeichnet, daß vor dem Aufschneiden und Abziehen der Platte von der Kalanderwalze unter reduziertem Druck eine Paste auf das Plattenmaterial aufgetragen wird.

11. Verfahren nach einem der vorhergehenden Ansprüche,
dadurch gekennzeichnet, daß die Steuerung des Druckes und/oder der Friktion der Kalanderwalzen in Abhängigkeit der zunehmenden Dicke des Materials erfolgt, wobei vorzugsweise bis zu einer Dicke von ca. 0,25 mm bis 0,4 mm der Druck konstant ist und/oder die Friktion 0 % beträgt.

12. Verfahren nach Anspruch 11,
dadurch gekennzeichnet, daß nach dem Verfahrensabschnitt mit konstantem Druck ein allmählicher Druckanstieg erfolgt und daß eine negative Friktion eingestellt ist, die -3,0 % oder mehr, vorzugsweise -5,0 % beträgt, wobei vorzugsweise der konstante Druck ca. 137,3 kN (14 t) und der maximale Druck ca. 158,9 kN (16,2 t) beträgt.

13. Verfahren nach einem der vorhergehenden Ansprüche,
dadurch gekennzeichnet, daß bezogen auf das Trockengewicht der Mischung der Anteil der Fasern 20 % bis 50 % beträgt, wobei vorzugsweise der Mineralfaseranteil 30 % und der Anteil der Kunststoffasern 3 % beträgt.

14. Verfahren nach Anspruch 13,
dadurch gekennzeichnet, daß die Mineralfasern aus einem amorphen Ca-Mg-Al-Silikat bestehen.

15. Verfahren nach einem der Ansprüche 13 oder 14,
dadurch gekennzeichnet, daß verschiedene Füllstoffe zugegeben werden, die bezogen auf das Trockengewicht der Mischung insgesamt einen Anteil von etwa 53 % umfassen, wobei vorzugsweise als Füllstoffe calziniertes Aluminiumsilikat und Siliziumdioxid, deren Oberfläche mit Aminosilan versehen ist, sowie amorphes Siliziumdioxid vorgesehen sind.

16. Verfahren nach einem der Ansprüche 13 bis 15,
dadurch gekennzeichnet, daß die Zusatzstoffe bezogen auf das Trockengewicht der Mischung einen Anteil von ca. 2,46 % umfassen.

17. Verfahren nach einem der Ansprüche 13 bis 16,
dadurch gekennzeichnet, daß der Anteil des Gummis bezogen auf das Trockengewicht etwa 11,7 % beträgt, wobei die Gummilösung aus ca. 5/6 Methylbenzol und 1/6 Ethylen-Propylen-Terpolymer besteht.

18. Verfahren nach einem der vorhergehenden Ansprüche,
dadurch gekennzeichnet, daß einer der Zusatzstoffe ein Farbruß ist.

## Claims

1. A process for the manufacture of plate-shaped gasket materials in which fibres are mixed with filler materials with the addition of rubber and this mixture is processed into plates in a calender under temperature and pressure, characterised by the following process stages:
- measurement of the quantities of raw materials,
- placing of the synthetic fibres, filler materials and additives into a mixing receptacle and mixing in a dry state,
- addition of a rubber solution whilst continuing mixing,
- addition of a quantity of mineral fibres,
- continuation of the mixing process and creation of a vacuum,
- removal of a given amount of the solvent contained in the rubber solution under vacuum,
- storage of the mixture for a pre-determined period (maturing period),
- wetting of the mixture with solvent,
- insertion of a standard measure into the gap between the rollers of the calender,
- feeding of the mixture into the gap between the rollers of the calender and production of a given plate thickness at initially constant and later increasing pressure in the calender,
- cutting and removal of the plate.

2. A process in accordance with Claim 1,
characterised in that the components are mixed at slow speed before the vacuum is created and at a higher speed in the vacuum.

3. A process in accordance with one of the preceding claims,
characterised in that the period for storing the mixture is at least six hours and preferably more than twelve hours.

4. A process in accordance with one of the preceding claims,
characterised in that after it has been wetted with solvent the mixture is stored for at least two hours.

5. A process in accordance with Claim 2,
characterised in that the speed of the mixer is approximately 40 n/min to 70 n/min, and preferably 55 n/min, after adding the quantity of mineral fibre and approximately 80 n/min to 140 n/min, preferably 110 n/min, during the vacuum, with in particular the speed of the mixer before the addition of the quantity of mineral fibre being significantly higher than that during the addition of the quantity of mineral fibre.

6. A process in accordance with one of the preceding claims,
characterised in that the process of mixing the synthetic fibres and the filler materials in a dry state lasts approximately two minutes.

7. A process in accordance with one of the preceding claims,
characterised in that the addition of the rubber solution and the mixing in of the quantity of mineral fibre takes place over a period of approximately three minutes.

8. A process in accordance with one of the preceding claims,
characterised in that the removal of the solvent takes approximately eight to fifteen minutes, preferably ten minutes, with the pressure in the evacuated space preferably being approximately 50 mbar to 120 mbar.

9. A process in accordance with one of the preceding claims,
characterised in that a wash is applied to the calender roller at the start of calendering.

10. A process in accordance with one of the preceding claims,
characterised in that a plastic is applied to the plate material before the plate is cut and removed from the calender roller under reduced pressure.

11. A process in accordance with one of the preceding claims,
characterised in that the pressure and/or friction of the calender rollers is adjusted as the thickness of the material increases, whereby pressure is preferably constant and/or friction 0 % up to a thickness of approximately 0.25 mm to 0.4 mm.

12. A process in accordance with Claim 11,
characterised in that alter the phase of the process at constant pressure, the pressure increases gradually and a negative friction of -3.0 % or more, preferably -5.0 %, is set, with the constant pressure preferably being approximately 137.3 kN (14 t) and the maximum pressure preferably approximately 158.9 kN (16.2 t).

13. A process in accordance with one of the preceding claims,
characterised in that the quantity of fibres represents 20 % to 50 % of the dry weight of the mixture, with the quantity of mineral fibre being preferably 30 % and the percentage of plastic fibres 3 %.

14. A process in accordance with Claim 13,
characterised in that the mineral fibres consist of an amorphous Ca-Mg-Al silicate.

15. A process in accordance one of Claims 13 or 14,
characterised in that the various filler materials which are added represent a total of approximately 53 % of the dry weight of the mixture, with the filler materials used being preferably calcined aluminium silicate and silicon dioxide, surface-coated with hydrosilicon, and amorphous silicon dioxide.

16. A process in accordance one of Claims 13 to 15,
characterised in that the additives represent approximately 2.46 % of the dry weight of the mixture.

17. A process in accordance one of Claims 13 to 16,
characterised in that the rubber represents approximately 11.7 % of the dry weight, with the rubber solution consisting of approximately 5/6 methylbenzene and 1/6 ethylene propylene terpolymer.

18. A process in accordance one of the preceding claims,
characterised in that one of the additives is a coloured soot.

## Revendications

1. Procédé de fabrication de matériaux d'étanchéité en forme de plaques, dans lequel des fibres sont mélangées avec des charges en ajoutant du caoutchouc et ce mélange est transformé en plaques dans une calandre sous l'effet de la température et de la pression, caractérisé par des phases de procédé suivantes :
- dosage des parts de matières premières,
- introduction de fibres de matière plastique, de charges et d'additifs dans un réservoir de mélange et mélange à l'état sec,
- addition d'une solution de caoutchouc en poursuivant le mélange,
- introduction d'une part de fibres minérales,
- poursuite de l'opération de mélange avec production d'un vide,
- extraction sous vide d'une quantité définie du solvant contenu dans la solution de caoutchouc,
- entreposage du mélange pendant une période prédéfinie (temps de maturation),
- humification du mélange par du solvant,
- amenée d'une masse de fond dans l'espace entre cylindres de la calandre,
- amenée du mélange dans l'espace entre cylindres de la calandre et production d'une épaisseur de plaque définie à pression d'abord constante, puis croissante, de la calandre,
- découpe et enlèvement de la plaque.

2. Procédé suivant la revendication 1, caractérisé en ce que le mélange des constituants est assuré avec une faible vitesse de rotation avant la production du vide et avec une vitesse accrue dans le vide.

3. Procédé suivant l'une des revendications précédentes, caractérisé en ce que la période pour l'entreposage du mélange est d'au moins six heures, de plus de douze heures de préférence.

4. Procédé suivant l'une des revendications précédentes, caractérisé en ce que le mélange est entreposé pendant au moins deux heures après l'humidification par du solvant.

5. Procédé suivant la revendication 2, caractérisé en ce que la vitesse de rotation du mélangeur est de 40 à 70 t/min, de 55 t/min de préférence, après l'introduction de la part de fibres minérales, et de 80 à 140 t/min environ, de 110 t/min de préférence, sous l'effet du vide, la vitesse de rotation du mélangeur étant en particulier essentiellement plus élevée avant l'immixtion de la part de fibres minérales que lors de l'immixtion de la part de fibres minérales.

6. Procédé suivant l'une des revendications précédentes, caractérisé en ce que l'opération de mélange de fibres de matière plastique et de charges à l'état sec s'effectue pendant deux minutes environ.

7. Procédé suivant l'une des revendications précédentes, caractérisé en ce que l'addition de la solution de caoutchouc et l'immixtion de la part de fibres minérales s'effectuent chacune sur une période de trois minutes environ.

8. Procédé suivant l'une des revendications précédentes, caractérisé en ce que l'extraction du solvant s'effectue pendant huit à quinze minutes environ, pendant dix minutes de préférence, la pression dans l'espace sous vide étant de préférence de 50 mbar à 120 mbar.

9. Procédé suivant l'une des revendications précédentes, caractérisé en ce qu'une pâte de ciment est appliquée sur le cylindre de calandre au début du calandrage.

10. Procédé suivant l'une des revendications précédentes, caractérisé en ce qu'une pâte est appliquée sur le matériau en plaque sous pression réduite, avant la découpe et l'enlèvement de la plaque du cylindre de calandre.

11. Procédé suivant l'une des revendications précédentes, caractérisé en ce que la commande de la pression et/ou de la friction des cylindres de calandre est assurée en fonction de l'épaisseur croissante du matériau, la pression étant constante et/ou la friction étant de 0 % jusqu'à une épaisseur de 0,25 à 0,4 mm environ de préférence.

12. Procédé suivant la revendication 11, caractérisé en ce qu'une montée graduelle en pression est assurée après la phase de procédé à pression constante et en ce qu'une friction négative est réglée, de -3,0 % ou plus, de -5,0 % de préférence, la pression constante étant de préférence égale à 137,3 kN (14t) environ, et la pression maximale étant égale à 158,9 kN (16,2t) environ.

13. Procédé suivant l'une des revendications précédentes, caractérisé en ce que la part des fibres est de 20 à 50 % par rapport au poids à l'état sec du mélange, la part de fibres minérales étant de préférence de 30 % et la part des fibres de matière plastique étant de 3 %.

14. Procédé suivant la revendication 13, caractérisé en ce que les fibres minérales sont constituées par un silicate amorphe Ca-Mg-Al.

15. Procédé suivant l'une des revendications 13 et 14, caractérisé par l'ajout de différentes charges comportant au total une part de 53 % environ par rapport au poids à l'état sec du mélange, les charges prévues étant de préférence du silicate d'aluminium calciné et du bioxyde de silicium, dont la surface est munie d'aminosilane, ainsi que du bioxyde de silicium amorphe.

16. Procédé suivant l'une des revendications 13 à 15, caractérisé en ce que les additifs comportent une part de 2,46 % environ par rapport au poids à l'état sec du mélange.

17. Procédé suivant l'une des revendications 13 à 16, caractérisé en ce que la part du caoutchouc est de 11,7 % environ par rapport au poids à l'état sec du mélange, la solution de caoutchouc se composant environ de 5/6 de méthylbenzène et de 1/6 de terpolymère éthylène-propylène.

18. Procédé suivant l'une des revendications précédentes, caractérisé en ce que l'un des additifs est une suie colorante.
